# EUROPÄISCHE PATENTANMELDUNG

(11) **EP 0 985 688 A1**
(43) Veröffentlichungstag der Anmeldung: **15.03.2000**
(21) Anmeldenummer: 99116769.3
(22) Anmeldetag: 30.08.1999
(51) Int. Cl.: C08F 212/08, C08F 2/18, B01J 20/26, B01J 39/20, B01J 41/14, B01D 15/08

(54) **Polymerisationsverfahren zur Herstellung vernetzter Copolymere**

(30) Priorität: 11.09.1998 DE 19841510
(71) Anmelder: Bayer Aktiengesellschaft, 51368 Leverkusen (DE)
(72) Erfinder: Born, Ralf-Jürgen, Dr., 40789 Monheim (DE); Halle, Olaf, Dr., 51061 Köln (DE); Hecker, Martin, 33102 Paderborn (DE); Moritz, Hans-Ulrich, Prof. Dr., 21227 Bendestorf (DE)

(57) **Zusammenfassung**

Es wird ein Polymerisationsverfahren zur Herstellung vernetzter Copolymere beansprucht, bei dem ein Gemisch aus einer Monovinylverbindung und einer Polyvinylverbindung in Gegenwart einer Metallverbindung zur Reaktion gebracht werden, wobei das Metall aus den Übergangsmetallnebengruppen I., II. oder VIII. stammt und seine Konzentration 0,005 bis 5 Gew.-%, berechnet als Metall, bezogen auf die Masse an Polyvinylverbindung betragen kann.

## Beschreibung

Die Erfindung betrifft ein Polymerisationsverfahren zur Herstellung vernetzter Copolymere sowie die Polymere selber, die man durch radikalische Polymerisation einer Polyvinyl- und einer Monovinylverbindung erhält und deren Verwendung als Grundpolymere bei der Herstellung von Ionenaustauschern, Adsorbern, Chromatografie-Säulen oder Werkstoffen.

Die Polymerisation kann zu diesem Zweck in Substanz beispielsweise im Kneter oder Extruder, Lösung oder Suspension durchgeführt werden. Die anfallenden, vernetzten Copolymere sind dann z.B. als Ausgangsverbindungen für Ionenaustauscher, Adsorber, Chromatografie-Säulen oder Werkstoffe zu verwenden. Neben der Gestalt des Polymers, die vor allem durch die angewandten mechanischen Verfahrensoperationen bestimmt wird, ist die Verwendbarkeit der vernetzten Harze in weiteren Verfahrensschritten durch bestimmte Polymereigenschaften determiniert. Dies ist zum einen der Grad der Quellbarkeit und zum anderen die Menge des Anteils, der durch Extraktion aus dem Copolymerisat herausgelöst werden kann, der sogenannte lösliche Anteil.

In DE 3 200 968 wird ein Suspensionspolymerisationsverfahren gezeigt, bei dem ein Gemisch aus einem Monovinylmonomeren und einem Polyvinylmonomeren unter Verwendung von Carboxymethylcellulose als ionisches Dispergiermittel in Suspension polymerisiert wird und dabei wenigstens eine Metallverbindung aus der Gruppe Eisen, Zink, Kupfer im Polymerisationssystem in einer Menge von 0,5 bis 10 Gew.-%, berechnet als Metall, bezogen auf das Gewicht der Carboxymethylcellulose, in der wäßrigen Phase zugegen ist. Nachteilig an diesem Verfahren ist jedoch die Verschiebung des Korngrößenspektrums zu höheren Korngrößen. Erstrebenswert wäre es, ein Verfahren zu finden, in dem die Korngrößenverteilung des Zielkorns (0,1-0,6 mm) unverändert bleibt und gleichzeitig die Polymereigenschaften verändert werden (größere Quellbarkeiten bei gleichbleibendem löslichen Anteil).

In DD 56 936 wird ein Verfahren zur Herstellung von perlförmigen Polymerisaten und Mischpolymerisaten in wäßriger Suspension, insbesondere von Styrol und Divinylbenzol für sich alleine oder im Gemisch, beschrieben. Zur Erzielung eines engen Korngrößenspektrums wurden dabei Cu(I)-Salze in Mengen von 0,0025 bis 0,5 % bezogen auf die eingesetzte Monomermenge in die wäßrige Phase zugesetzt, um die Stabilisation der wäßrigen Phase mit Polyvinylalkoholen zu unterstützen. Die unter Verwendung der Angaben der Patentschrift hergestellten Perlpolymerisate besitzen zwar die beschriebene Korngrößenverteilung, jedoch sind die Quellbarkeiten nur durchschnittlich und die Masse des löslichen Anteils zu hoch.

Dabei sind im Produkt die Quellbarkeit und der lösliche Anteil unterschiedlich zu bewerten. Ein gewisser Grad an Quellbarkeit der Copolymere ist unabdingbar, um die Voraussetzung für die folgenden Verfahrensschritte und späteren Anwendungen zu schaffen. Dem gegenüber stellt das Vorhandensein eines löslichen Anteils ein unerwünschtes Faktum dar: Teile des Edukts sind nicht Bestandteil des Netzwerkes und werden bei folgenden Verfahrensschritten herausgelöst. Es ergibt sich also ein Ausbeute- und Wertverlust des Copolymerisates.

Beide Größen hängen diametral vom Vernetzergehalt, also dem Gehalt der Polyvinylkomponente, ab. Wird wenig Vernetzer eingesetzt, so entsteht ein lichtes Polymernetzwerk, das wohl eine hohe Quellbarkeit, aber auch einen hohen lösbaren Anteil aufweist. Eine sukzessive Erhöhung des Vernetzergehaltes im Reaktionsgemisch drängt zwar die Menge des löslichen Anteils zurück, zieht aber eine immer schlechtere Quellbarkeit nach sich.

Das Verhältnis, in dem beide Meßgrößen auftreten, hängt vor allem vom chemischen Verhalten der Monomere und der Reaktionsführung während der Polymerisation ab.

Es hat sich gezeigt, daß im Falle der Copolymerisation von Monovinyl- mit Divinylverbindungen die vernetzungsfähigen Divinylverbindungen meist schneller in das Copolymere einbauen, als die Monovinylverbindungen. So ist der r-Wert der das Verhältnis der Einbauraten von Mono- zu Polyvinylverbindung bezeichnet, im konkreten Fall Styrol/para-Divinylbenzol 0,23 oder Styrol/meta-Divinylbenzol 0,43. Das bedeutet, daß die vernetzungsfähige Verbindung im ersten Fall mehr als viermal so schnell, im zweiten Fall mehr als doppelt so schnell in das Polymere eingebaut wird, wie die Monovinylverbindung.

Bei niedrigen Vernetzergehalten ist ein sehr hoher Anteil der Gesamtpolymermasse nicht im Netzwerk gebunden und daher für alle weiteren Prozeßschritte verloren. Bei jedem vernetzten Polymerisat wird folglich ein Kompromiß zwischen Quellfähigkeit und Maß des herauslösbaren Anteils eingegangen.

In der Zeitschrift Macromolecules (1997, Band 30, S. 4073 - 4077) wird diskutiert, inwieweit die Reaktivität der netzwerkbildenden Polyvinylkomponente die Homogenität und somit auch die Quellbarkeit sowie den löslichen Anteil von Polymernetzwerken bestimmt. Dort wird deutlich, daß in Batch-Polymerisationen nur durch die Wahl eines anderen Vernetzers die Eigenschaften des Polymernetzwerkes verändert werden können.

Bei der Herstellung von Polymerisaten ist es vorteilhaft, mit der gleichen Menge und dem gleichen Typ von Vernetzer ein homogeneres Polymernetzwerk zu bilden, das eine höhere Quellbarkeit besitzt, ohne die Menge des löslichen Anteils zu erhöhen. Gleichzeitig soll die aus dem Produktionsprozeß resultierende Polymergestalt durch die Optimierung unverändert bleiben. Dies ist im Falle der Suspensionspolymerisation der Mittelwert des Korndurchmessers der Perlen im Zielkornbereich.

Mögliche reaktionstechnische Ansätze sind z. B. die Anwendung von Semi-Batch Verfahren, in denen die Polyvinylkomponente im Laufe der Reaktion zum Reaktionsgut zudosiert wird. Auch der Einsatz eines Seed-Feed-Verfahrens wird praktiziert. Beide Maßnahmen verhindern, daß das Reaktionssystem an der schneller reagierenden Polyvinylkomponente bei höheren Reaktionsumsätzen verarmt.

Diese Verfahrensschritte ziehen jedoch aufwendige Steuer- und Regelungstechniken nach sich. Im Falle der Seed-Feed-Polymerisation, in der unter Umständen nur interpenetrierende Netzwerke entstehen, läuft der Herstellungsprozeß in mehreren Stufen ab, der Produktionsprozeß muß unterbrochen werden. Die Substitution der Polyvinylkomponenten ist dabei nur in Ausnahmefällen möglich, da sie die physikalischen Eigenschaften (Stabilität) des Netzwerkes maßgeblich mitbestimmt. Es besteht also der Bedarf nach einem Verfahren, bei dem unter Verwendung gleicher Vernetzer und Vernetzergehalte ein Polymernetzwerk hergestellt wird, das eine erhöhte Quellfähigkeit aufweist, ohne daß der herauslösbare Anteil erhöht wird.

Es wurde nun gefünden, daß Polymere mit höherer Quellfähigkeit erhalten werden können, wenn die Polymerisation in Gegenwart einer Metallverbindung durchgeführt wird. Im Falle der Suspensionspolymerisation bleibt der Mittelwert des Korndurchmessers der Perlen im Bereich unter 1 mm unverändert.

Gegenstand der Erfindung ist ein Polymerisationsverfahren, bei dem ein Gemisch aus einem oder mehreren, bevorzugt einem bis drei Monovinylmonomeren und einem oder mehreren, bevorzugt einem bis vier Polyvinylmonomeren in Gegenwart einer Metallverbindung unter Verwendung eines oder mehrerer radikalischer Initiatoren polymerisiert wird, dadurch gekennzeichnet, daß wenigstens eine Metallverbindung eines Metalls der I., II. oder VIII. Nebengruppe des Periodensystems in einer Menge von 0,005 bis 5 Gew.-%, bevorzugt 0,01 bis 2 Gew.-%, berechnet als Metall, bezogen auf die Masse an Polyvinylverbindung betragen kann und im Falle der Suspensionspolymerisation nichtionische Dispergierhilfsmittel als Stabilisatoren verwendet werden. Überraschenderweise werden durch das erfindungsgemäße Verfahren vernetzte Copolymere erhalten, die sich durch ein deutlich verbessertes Verhalten in der Quellbarkeit vom Stand der Technik unterscheiden.

Beispiele für erfindungsgemäß verwendbare Monovinylverbindungen sind gegebenenfalls Halogen, Alkyl, Alkoxy oder Phenyl substituierte, eine polymerisierbare C=C-Doppelbindung enthaltende Substanzen. Beispiele für Monovinylverbindungen sind Styrol, Ethylstyrol, iso-Propylstyrol, n-Propylstyrol, Butylstyrol, Chlorstyrol, Methoxystyrol, tert.-Butoxystyrol.

Beispiele für Polyvinylmonomere, die erfindungsgemäß verwendet werden können, sind gegebenenfalls Halogen, Alkyl, Alkoxy oder Phenyl substituierte, im Grundgerüst mindestens zwei C=C-Doppelbindungen enthaltende Verbindungen wie Divinylbenzol, Divinyltoluol, Divinylxylol, Aryldivinylbenzol, Halogenyldivinylbenzol.

Bevorzugt ist die Verwendung eines Gemisches aus einem Monovinylmonomer wie Styrol als Hauptkomponente und einem Polyvinylmonomer mit handelsüblichen Isomeren des Divinylbenzols als Hauptkomponente in Anwesenheit von Kupfer(I)chlorid.

Obwohl das Verhältnis von Monovinylmonomer zu Polyvinylmonomer je nach Verwendungszweck der erhaltenen Polymere in einem weiten Bereich variieren kann, beträgt die Menge des Polyvinylmonomers im allgemeinen 0,05 bis 100 Gew.-% bezogen auf das Gewicht der Monovinylkomponente, vorzugweise 0,1 bis 10 Gew.-%.

Für das erfindungsgemäße Verfahren geeignete Polymerisationsinitiatoren sind z.B. Peroxyverbindungen wie Dibenzoylperoxid, Dilauroylperoxid, Bis(p-chlorbenzoylperoxid), Dicyclohexylperoxydicarbonat, tert.-Butylperoctoat, 2,5-Bis(2-ethylhexanoylperoxy)-2,5-dimethylhexan, tert.-Amylperoxy-2-ethylhexan sowie Azoverbindungen wie 2,2'-Azobis(isobutyronitril) und 2,2'-Azobis(2-methylisobutyronitril). Die Initiatoren werden im allgemeinen in Mengen von 0,05 bis 2,5 Gew.-% vorzugsweise 0,2 bis 1,5 Gew.-%, bezogen auf die Summe aus Monomer und Vernetzer, angewendet.

Als weitere Zusätze in der Mischung können sogenannte Porogene verwendet werden, um im Polymerisat eine makroporöse Struktur zu erzeugen. Hierfür sind organische Lösungsmittel geeignet, die das gebildete Polymerisat schlecht lösen bzw. quellen. Beispielhaft seien Hexan, Octan, Isooctan, Isododecan, Methylisobutylketon und Octanol genannt.

Die Polymerisationstemperatur richtet sich nach der Zerfallstemperatur des eingesetzten Initiators. Sie beträgt im allgemeinen 50 bis 150°C, vorzugsweise 55 bis 100°C. Die Polymerisation dauert 0,5 bis einige Stunden. Es hat sich bewährt, ein Temperaturprogramm anzuwenden, bei dem die Polymerisation bei niedriger Temperatur, z.B. 60°C, begonnen und mit fortschreitendem Polymerisationsumsatz die Reaktionstemperatur gesteigert wird. Auf diese Weise läßt sich z.B. die Forderung nach sicherem Reaktionsverlauf und hohem Polymerisationsumsatz sehr gut erfüllen.

Wird das erfindungsgemäße Polymerisationsverfahren auf z.B. Suspensionspolymerisationen angewendet, so müssen nichtionische Dispergierhilfsmittel als Suspensionsstabilisatoren und gegebenenfalls ein Puffersystem zugegen sein. Als Dispergierhilfsmittel sind natürliche und synthetische wasserlösliche Polymere, wie z.B. Gelatine, Stärke, Polyvinylalkohol, Polyvinylpyrrolidon und Copolymerisate aus (Meth)acrylsäureestern bevorzugt. Sehr gut geeignet sind auch veretherte Cellulosen wie beispielsweise Hydroxyethylcellulosederivate, Methylhydroxyethylcellulosederivate oder Methylhydroxyethylcellulosederivate, die möglichst keine ionischen Carboxylgruppen tragen, um das Korngröße-Spektrum nicht zu unerwünscht größeren Perldurehmessern zu verschieben.

Im Falle dass das erfindungsgemäße Verfahren nach der Methode der Suspensionspolymerisation durchgeführt wird, liegt der Anteil der dispergierten Phase bevorzugt bei 10 bis 60 % der Gesamtmasse.

Bei der vorliegenden Erfindung ist es wesentlich, daß wenigstens eine Verbindung eines Metalls, ausgewählt aus den I., II. oder VIII. Nebengruppe des Periodensystems in der Reaktion verwendet wird, vorzugsweise Silber oder Kupfer in der Oxidationsstufe I.

Als eine solche Verbindung kann jede Verbindung verwendet werden, sofern sie das Polymeristionssystem nicht negativ beeinflußt. Beispielsweise ist es allgemein möglich, Halogenide, wie Chloride, Bromide, Pseudohalogenide, anorganische Salze, wie Sulfate, Nitrate, Phosphate, organische Säuresalze, wie Oxalate, Acetate, und Hydroxyde oder Oxide der vorerwähnten Metalle zu verwenden. Die Menge der Verbindung beträgt 0,005 bis 5 Gew.-%, berechnet als Metall, bezogen auf die Masse an Polyvinylverbindung, vorzugsweise 0,001 bis 2 Gew.-%.

Ist die zugegebene Menge zu gering, tritt der Effekt nicht auf, ist sie zu hoch, so kann es zu einer Inhibierung der Polymerisation kommen.

Wichtig ist, daß vor Beginn der Polymerisation die Metallverbindung zur organischen Phase (Ölphase) gegeben wird. Dies muß vor allem bei Anwendung von Suspensionspolymerisationsverfahren beachtet werden. Anschließend wird sie gut durchmischt. Damit wird sichergestellt, daß die Verbindung homogen im Reaktionssystem (Ölphase) vorliegt.

Im allgemeinen wird das erfindungsgemäße Verfahren unter Normaldruck durchgeführt. Es ist aber auch möglich, das Verfahren bei Überdruck bis zu 100 bar durchzuführen.

Nach dem erfindungsgemäßen Verfahren erhält man vernetzte Copolymerisate, die eine höhere Quellbarkeit aufweisen, ohne daß sich der lösliche Anteil signifikant erhöht oder im Falle einer Suspensionspolymerisation der Mittelwert des Korndurchmessers der Perlen im Bereich unter 1 mm verändert wird.

Die Erfindung wird in den nachfolgenden Beispielen und Vergleichsbeispielen näher erläutert:

Beim erfindungsgemäßen Verfahren wird die Metallverbindung vor der Reaktion zum Vernetzter gegeben. So wird eine Stammlösung aus der Polyvinylkomponente (hier beispielsweise Divinylbenzol, 80 % Reinheit) und dem Metallsalz (Gewicht und Art laut Tabelle 1) in situ erzeugt. Mit einem Teil dieser Stammlösung (Polyvinylkomponente und definierte Metallmenge) wird nach gutem Durchmischen direkt die Reaktionslösung angesetzt.

**Tabelle 1**

| Alle Angaben beziehen sich auf 100 g Divinylbenzol (80%ige Reinheit) | | |
|---|---|---|
| Nr. der Stammlösung | Salz | Masse in g |
| **erfindungsgemäß** | | |
| 1 | Cu₂Cl₂ | 0,334 |
| 2 | Ag(NO)₃ | 1,088 |

| **Vergleich** | | |
|---|---|---|
| 3 | kein Salz | --- |

### Beispiel 1

In einen mit Stopfen verschließbaren Glaskolben (Volumen: 5 ml) werden 1 g Styrol und 0,017 g der Stammlösung (1 oder 3) unter Stickstoffatmosphäre gegeben und mit 0,005 g reinem Dibenzoylperoxid versetzt. Die Polymerisation wird durch Aufheizen auf 70°C in einem Ölbad gestartet. Der Kolben verbleibt für die gesamte Reaktionsdauer (12 Stunden) in diesem Bad. Während der letzten Stunde wird die Ölbadtemperatur auf 85°C erhöht. Nach dem Abkühlen auf Raumtemperatur kann das Polymerisat dem Kolben entnommen werden. Es wird ausgewogen und in Toluol (als Extraktions- und Quellmittel) überführt. Aus der Gewichtszunahme des gequollenen Polymerisates wird der Quellungsgrad (Verhältnis Gewicht gequollenes zu Gewicht ungequollenes Polymer) berechnet. Eine weitere Probe wird mit Hilfe einer Soxhlet-Apparatur und Toluol als Lösemittel über 12 h extrahiert. Das gesamte Extrakt wird in einen gewogenen Kolben überführt und das Extraktionsmittel nacheinander am Rotationsverdampfer und im Hochvakuum entfernt. Aus dem Gewichtsverhältnis von Kolbenrückstand zu eingewogener Polymermenge wird der Anteil der löslichen, unvernetzten Polymeren berechnet (sog. löslicher Anteil). Zur Auswertung siehe Tabelle 2.

**Tabelle 2**

| Reaktionsgemisch | löslicher Anteil | Quellungsgrad |
|---|---|---|
| **erfindungsgemäß,** | | |
| Stammlösung 1 | 2,4 % | + 8,30 % |

| **Vergleich,** | | |
|---|---|---|
| Stammlösung 3 | 2,3 % | + 7,30 % |

### Beispiel 2

In einen 2,5 1 Glasreaktor, der mit einem Rührer, einer Temperaturkontrolle und einem Stickstoffeinlaß versehen ist, werden 11,5 g Hydroyxethylcellulose und 768 g Wasser vorgelegt. Dann wird aus 259 g Styrol, 4,5 g Divinylbenzol einer Stammlösung (Auswahl s. Tabelle 1) und 1,37 g Dibenzoylperoxid die organische Phase hergestellt und unter Rühren mit 100 UpM (Umdrehungen pro Minute) unter Stickstoffstrom zur vorgelegten wäßrigen Phase hinzugegeben. Nach Erhöhung der Drehzahl auf 140 UpM wird der Ansatz auf 70°C aufgeheizt und für 10 Stunden bei dieser Temperatur belassen. Nach Aufheizen auf 85°C und einer weiteren Reaktionszeit von 2 Stunden kann das Perlpolymerisat vom Gemisch abgetrennt werden. Der lösliche Anteil wird durch Extraktion einer genau eingewogenen Menge Perlpolymerisat mit Toluol aus dem Verdampfungsrückstand des Extraktionsmittels berechnet (Verhältnis Gewicht Rückstand zu Gewicht Polymereinwaage). Der Quellgrad wird aus der Volumenzunahme einer Perlschüttung ermittelt (Volumenverhältnis von gequollenem zu ungeqollenem Polymer). Ergebnisse sind Tabelle 3 zu entnehmen.

**Tabelle 3**

| Reaktionsgemisch | löslicher Anteil | Quellungsgrad | Mittelwert des Durchmessers der Perlen im Bereich unter 1 mm |
|---|---|---|---|
| **erfindungsgemäß,** | | | |
| Stammlösung 1 | 2,4 % | + 6,8 % | 0,38 |
| Stammlösung 2 | 2,6 % | + 6,5 % | 0,34 |

| **Vergleich,** | | | |
|---|---|---|---|
| Stammlösung 3 | 2,4 % | + 6,0 % | 0,35 |

Anhand der Beispiele und der Vergleichsbeispiele kann gezeigt werden, daß mit dem erfindungsgemäßen Verfahren Polymernetzwerke hergestellt werden, die eine größere Quellbarkeit bei gleichbleibendem löslichen Anteil besitzten, ohne daß im Falle einer Suspensionspolymerisation der Mittelwert des Korndurchmessers der Perlen im Bereich unter 1 mm zu schlechteren Werten hin verschoben wird.

## Patentansprüche

1. Verfahren zur Herstellung vernetzter Copolymere, bei dem ein Gemisch einer oder mehrerer Monovinylverbindungen und einer oder mehrerer Polyvinylverbindungen unter Verwendung eines oder mehrerer radikalischer Initiatoren polymerisiert wird, dadurch gekennzeichnet, daß wenigstens eine Metallverbindung aus der I., II. oder VIII. Nebengruppe des Periodensystems in einer Menge von 0,005 bis 5 Gew.-%, berechnet als Metall, bezogen auf die Masse an Polyvinylverbindung betragen kann und im Falle der Suspensionspolymerisation nicht-ionische Dispergierhilfsmittel als Stabilisatoren verwendet werden.

2. Verfahren gemäß Anspruch 1, dadurch gekennzeichnet, daß die Menge des Polyvinylmonomers 0,05 bis 100 Gew.-% bezogen auf das Gewicht der Monovinylkomponente beträgt.

3. Verfahren gemäß Anspruch 1, dadurch gekennzeichnet, daß die Polyvinylkomponente und die Monovinylkomponente jeweils polymerisierbare C=C-Doppelbindungen enthaltende Substanzen als Hauptkomponenten enthalten.

4. Verfahren gemäß der Ansprüche 1 bis 3, dadurch gekennzeichnet, daß die Mono- oder Polyvinylkomponenten neben diesen Doppelbindungen noch weitere Halogen, Alkyl-, Alkoxy- oder Phenylsubstituenten tragen können.

5. Verfahren gemäß Anspruch 1, dadurch gekennzeichnet, daß die Metailverbindung, deren Metall der I., II. oder VIII. Nebengruppe entstammt, ein Halogenid, Pseudohalogenid oder das Salz einer anorganischen oder organischen Säure ist.

6. Verfahren gemäß der Ansprüche 1 oder 5, dadurch gekennzeichnet, daß die Metallverbindung eine Chlorid oder Nitrat-Verbindung ist.

7. Verfahren gemäß der Ansprüche 1 oder 6, dadurch gekennzeichnet, daß die Chlorid-Verbindung Kupfer der Oxidationsstufe I enthält.

8. Verfahren gemäß Anspruch 1, dadurch gekennzeichnet, daß die Polymerisation in einem Temperaturbereich von 50 bis 150°C in Gegenwart von 0,05 bis 2,5 Gew.-%, bezogen auf das Gesamtgewicht des Monomeren, eines radikalischen Polymerisationsinitiators durchgeführt wird.

9. Verfahren gemäß Anspruch 1, dadurch gekennzeichnet, daß Porogene zugegen sein können, deren Gehalt nicht mehr als 55 % der Gesamtmasse des Reaktionsgutes ausmacht.

10. Verfahren gemäß Anspruch 1, dadurch gekennzeichnet, daß der Anteil der dispergierten Phase zwischen 10 und 60 % der Gesamtmasse im Falle der Suspensionspolymerisation ausmacht.

11. Polymere aus einem Gemisch einer Monovinylverbindung und einer Polyvinylverbindung, die
i) in Gegenwart einer Metallverbindung der I., II. oder VIII. Ubergangsmetallgruppe,
ii) deren Konzentration von 0,005 bis 5 Gew % berechnet als Metall bezogen auf die Masse an Polyvinylverbindung beträgt,
iii) unter Verwendung radikalischer Initiatoren
polymerisiert werden, wobei im Falle der Suspensionspolymerisation nichtionische Dispergierhilfsmittel als Stabilisatoren verwendet werden.

12. Verwendung der Polymere, hergestellt nach Anspruch 11, als Grundpolymere bei der Herstellung von Ionenaustauschern, Adsorbern, ChromatografieSäulen oder Werkstoffen.
